# EUROPEAN PATENT APPLICATION

(11) **EP 1 939 610 A1**
(43) Date of publication of application: **02.07.2008**
(21) Application number: 07123250.8
(22) Date of filing: 14.12.2007
(51) Int. Cl.: G01N 23/04, A61B 6/00, A61B 6/03

(54) **System and method for radiographic inspection without a-priori information of inspected object**

(30) Priority: 29.12.2006 US 618160
(71) Applicant: General Electric Company, Schenectady, NY 12345 (US)
(72) Inventor: Birdwell, Thomas W., Middletown, OH 45044 (US); Isaacs, Ralph Gerald, Cincinnati, OH 45208 (US); Portaz, Joseph M., Wayne Township, OH 45062 (US); Mcfarland, Ronald C., Cincinnati, OH 45249 (US)
(74) Representative: Bedford, Grant Richard

(57) **Abstract**

A method of radiographic inspection (10) of an object includes the steps of: providing a radiation source (22) and a radiation detector (24) located on opposite sides of the object; positioning the radiation detector (24) to receive radiation transmitted through the object from the radiation source (22); radiographically imaging an region of interest (46) of the object with the radiation source (22) and the radiation detector (24), using an set of initial imaging parameters, to produce a test image; obtaining at least one quality measurement of the test image; comparing the quality measurement to predetermined image quality limits; and in response to the quality measurement exceeding the predetermined image quality limits, changing at least one of the initial imaging parameters to generate a new set of image parameters. The process may be repeated iteratively until a final set of imaging parameters is obtained.

## Description

This invention relates generally to radiographic inspection and more particularly to a method of radiographic inspection of complex objects such as airframes.

Aircraft, including their fuselages and nacelles, and other large structures, often require periodic inspection to determine their structural condition. This may be done visually or with non-destructive evaluation (NDE) techniques. Because of the complicated physical structure of aircraft fuselages and nacelles, radiographic inspection, such as X-ray inspection, is used to avoid having to disassemble overlapping components, insulation, wall coverings, etc. Modem digital electronic detectors are replacing X-ray film in many X-ray inspection applications.

Prior art radiographic inspection requires substantial a-priori knowledge of the structure and materials. Development of inspection parameters is typically done in an iterative fashion, with informed radiographers choosing initial process parameters, then making sequential improvements. After obtaining a satisfactory image, the parameters are recorded and used in future inspections of that product. This works well when the product's materials and configuration are consistent, but sufficient variability in either makes the inspection's parameters unsatisfactory. For example, differences in aircraft airframe and interior materials, including interior panels and insulation used, provide considerable variability in the absorption of x-rays and thus require different inspection parameters to be used. Since these differences are not known in advance, one must discover them in an expensive trial and error process.

In radiography, an x-ray beam is projected through an object. Depending on the density and dimensional configuration of the object, portions of these X-rays are absorbed. X-ray film or electronic detectors measure the x-rays transmitted through the object. Mapping the geometric pattern of the ratio of absorbed to transmitted x-rays reveals significant information of the object's materials and dimensional configuration. Defects in the material such as cracking, porosity, mechanical assembly errors, and a wide range of other defects can be accurately observed. Often however, objects not of interest to the inspection mask the features of interest. In airframe inspection, these include insulation and interior panels, as well as other objects. Changes in these objects materials or physical configuration can change the total absorption, moving the transmitted x-ray signal outside the useful dynamic range of the inspection system's settings, thus making it difficult to characterize the object to the required sensitivity. This requires that a radiographer review the images to make sure the parameters used are appropriate. When the objects change enough to exceed these limits, a new set of parameters must be selected and iteratively tried, greatly increasing the inspection time required.

The above-mentioned shortcomings in the prior art among others are addressed by the present invention, which provides in various aspects a radiographic inspection system and method that will improve the efficiency of inspection processes, when compared to prior art methods. The system accommodates greatly increased variability in the materials and object locations within the field of view of the x-ray image. In airframe inspection, this difference will permit the use of X-ray inspection during shorter maintenance intervals, permitting greatly enhanced flexibility in airframe maintenance operations, and in the inspection of other objects with variability of density or construction.

According to one aspect there is provided a method of radiographic inspection of an object, including: providing a radiation source and a radiation detector located on opposite sides of the object; positioning the radiation detector to receive radiation transmitted through the object from the radiation source; radiographically imaging region of interest of the object with the radiation source and the radiation detector, using a set of initial imaging parameters to produce a test image; obtaining at least one quality measurement of the test image; comparing the quality measurement to predetermined image quality limits; and in response to the quality measurement exceeding the predetermined image quality limits, changing at least one of the initial imaging parameters to generate a new set of image parameters.

According to another aspect of the invention, a system for radiographic inspection of an object includes: a radiation source carried by a first manipulator operable to position the radiation source on one side of a region of interest of the object; a radiation detector carried by a second manipulator operable to position the radiation detector on another side of the region of interest of the object such that the radiation detector can receive radiation transmitted through the region of interest from the radiation source to produce a test image using a set of initial imaging parameters; means for obtaining at least one quality measurement of the test image and comparing the quality measurement to predetermined image quality limits; and means for changing at least one of the initial imaging parameters to generate a new set of image parameters in response to the quality measurement exceeding the predetermined image quality limits.

The invention may be best understood by reference to the following description taken in conjunction with the accompanying drawing figures in which:
Figure 1 is a schematic front view of an inspection system constructed according to one aspect of the present invention and positioned around an aircraft;
Figure 2 is a schematic cross-sectional view of an aircraft fuselage with a radiation detector and source positioned for inspection thereof;
Figure 3 is a schematic view of a radiation source and detector operatively connected to a controller;
Figure 4 is a schematic front view of a radiation detector; and
Figure 5 is a view taken along lines 5-5 of Figure 2.

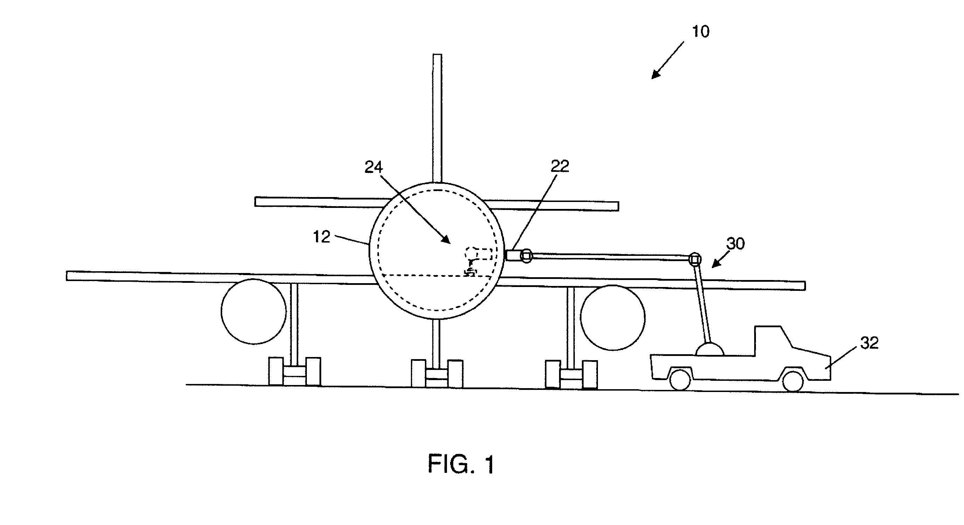

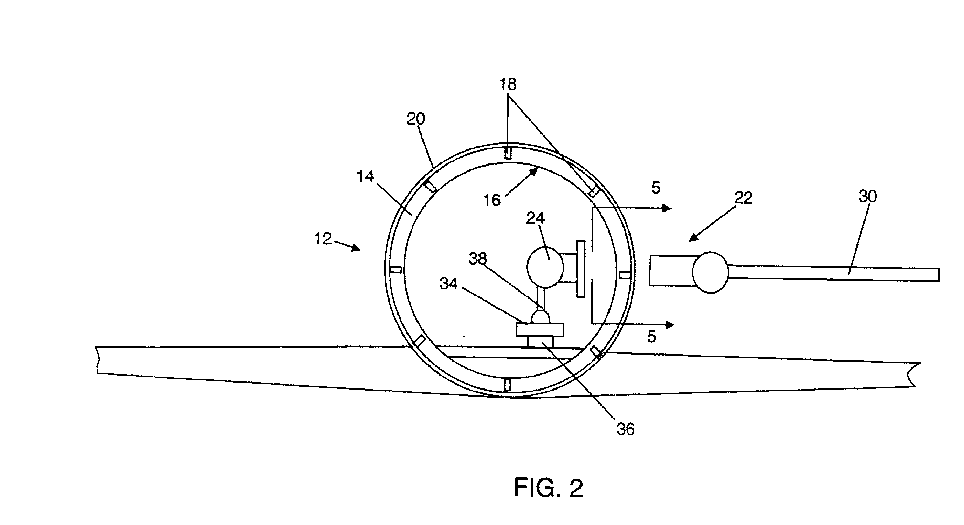

Referring to the drawings wherein identical reference numerals denote the same elements throughout the various views, Figures 1 and 2 illustrate a radiographic inspection system 10 for inspecting an aircraft fuselage 12. The fuselage 12 generally comprises a cylindrical wall 14 made up of circumferential frames 16 and longitudinal stringers 18 covered by a skin 20 of lightweight sheet metal. The inspection system 10 may be used with other types of structures as well.

The inspection system 10 includes a radiation source 22 located on a first side of the fuselage wall 14 and a radiation detector 24 located on a second, opposite side of the fuselage wall 14. The radiation source 22 and radiation detector 24 are relatively situated on opposite sides of the wall 14 so that radiation emitted by the radiation source 22 irradiates the fuselage wall 14 and then impinges on the radiation detector 24. As depicted in Figure 1, the radiation source 22 is located outside of the fuselage 12, and the radiation detector 24 is located inside of the fuselage 12. However, it should be noted that this arrangement could alternatively be reversed so that the radiation source 22 is inside and the radiation detector 24 is outside the fuselage 12.

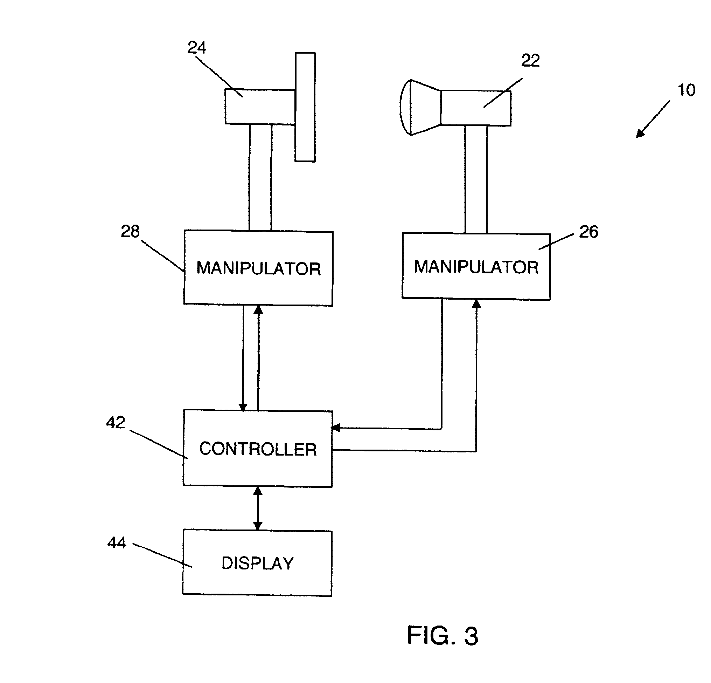

As shown schematically in Figure 3, A first manipulator 26 is provided for moving the radiation source 22 with respect to the fuselage 12, and a second manipulator 28 is provided for moving the radiation detector 24 with respect to the fuselage 12. The manipulators 26, 28 can be any type of device capable of producing the desired motion. This would include robotic devices, guide rail systems and the like. As shown in Figure 1, the first manipulator 26 comprises an articulated boom 30 mounted to a carrier vehicle 32. The boom 30 may be of a known type in which multiple-axis movement of the various members is provided by hydraulic actuators (not shown). In the illustrated example, the second manipulator 28 comprises a base 34 mounted on a rail 36 which extends parallel to the longitudinal axis of the fuselage 12. The radiation detector 24 is attached to the base 34 with a manipulator arm 38. The base 34 can be driven forward and aft along the rail 36 by an electric motor (not shown), and the manipulator arm 38 is able to move the radiation detector 24 in one or more axes to position it as required. It is noted that the present invention is equally suitable for use with any other kind of radiographic inspection system and does not require the specific arrangement of manipulators described above.

The radiation source 22 may be a standard industrial X-ray tube powered by a high voltage power supply (not shown). Alternative radiation sources, such as an isotopic radiation source producing gamma rays, could be used as well. The radiation source 22 provides a large cone-shaped or panoramic volume radiation flux, but may be collimated to limit this to a specific region of interest.

The radiation detector 24 can be any means that is capable of processing radiation emitted by the radiation source 22 into a viewable image. Although X-ray film could possibly be used, it is preferred that the radiation detector 24 be of the type that converts impinging radiation into an electrical output signal. Many suitable X-ray detectors are commercially available. As is known in the art, such X-ray detectors generally have an X-ray sensitive area and means for producing an output signal that is indicative of the X-rays impinging on the sensitive area.

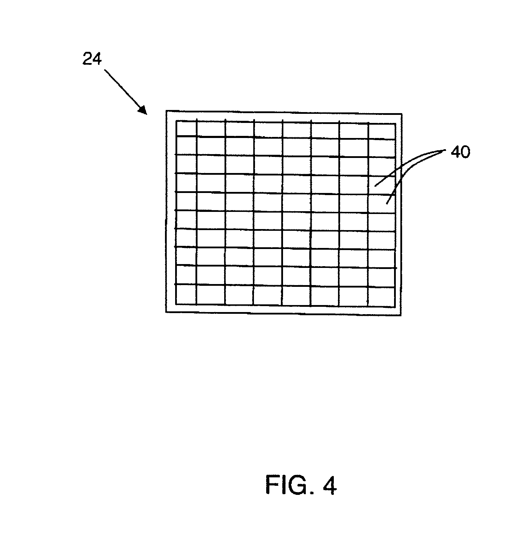

As shown in Figure 4, the radiation detector 24 is divided into a two-dimensional array of individual detector elements 40. It is noted that the number and size of the detector elements 40 are exaggerated for purposes of illustration. The output signal of each detector element 40 is provided within a range. An analog signal may be used, but more commonly the output signal would be digital data representing a discrete step value. For example, the output may be an integer value from 0 to 16,000 (or other suitable maximum value), with 0 representing no flux impinging on the detector element 40, and 16,000 representing the maximum detectable flux (i.e. saturation of the detector element 40). To produce preferred-quality images, it is desired that the flux striking the detector element 40, and thus its output, be in a smaller range. While the preferred range will vary with the specific application, an example of a preferred output range would be about 5000 to about 7000.

As shown schematically in Figure 3, the image data signals output by the radiation detector 24 are fed to a controller 42, which can be a conventional computer unit. The controller 42 processes these signals, as described in more detail below, and may optionally cause corresponding images to be displayed on a display 44. An operator is then able to view the displayed images to inspect for defects in the fuselage 12. The data image signals are also stored in a memory in the controller 42. The controller 42 also controls the operation of the radiation source 22, turning it on and off and regulating the voltage applied, and the manipulators 26 and 28.

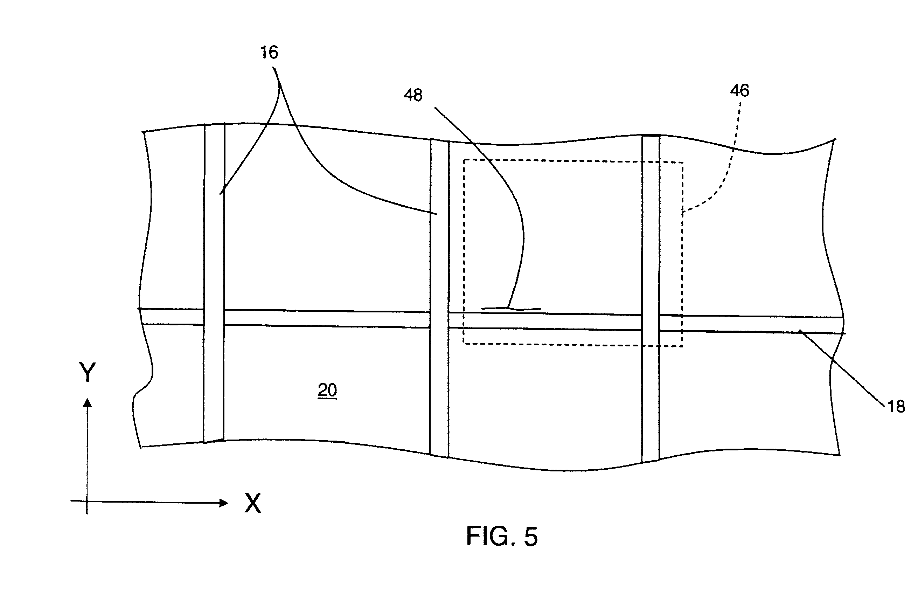

In operation, the first and second manipulators 24 and 26 are controlled to move the radiation source 22 into alignment with a region of interest (ROI) 46, e.g. a geometric area of selected size and shape, on the fuselage 12, as shown in Figure 5, and with the radiation detector 24 so that the detector 18 will be exposed to radiation from the radiation source 22, under the direction of the controller 42.

Once the radiation source 22 and the radiation detector 24 are aligned with the region of interest 46, the radiation source 22 is then turned on so that the region of interest 46 is illuminated with radiation at an initial flux level. Radiation emitted by the radiation source 22 passes through the fuselage wall 14 and impinges on the radiation detector 24. The radiation is converted into electrical signals that are fed to the controller 42. These signals represent a test image.

The test image is evaluated, for example using software running on the controller 42, to determine if at least one image quality measurement is within acceptable predetermined limits by comparing the test image to a pre-selected image quality standard, such as the above-noted desired detector output range. One or more statistical methods may be used to compare the test image to the standard. For example, as shown in Figure 5, the region of interest 46 encloses a portion of the skin 20, which is generally of uniform thickness, as well as portion of a stringer 18 and a frame 16, both of which are substantially thicker (as measured in a radial direction) than the skin 20. At any given flux level, more flux will be absorbed by the stringer 18 and the frame 16 than the skin 20, resulting in lower flux striking the detector element 40 and thus lower image density, in the detector elements 40 that are aligned with the thicker objects. This will reduce the mean image density within the region of interest 46 by a statistically significant amount, and depending on the relative dimensions of the various components, may reduce the mean image density to below the desired range.

In response to the image quality measurement exceeding the predetermined limits, the controller 42 automatically repeats the exposure with different parameters, for example, a different source flux intensity, exposure time, collimation, or source-to-detector distance, and again evaluates the image. This iteration continues until a test image meets the predetermined standard. A final set of imaging parameters, as well and the X-Y-Z location in space of the region of interest 46, may be stored in the controller 42 or other storage device for use in subsequent evaluations. The region of interest 46 may then be imaged and the image stored for human-readable display or computerized evaluation. For example, in Figure 5 a defect such as a small crack 48 in the skin 20 may be observed and evaluated in the final image. It is expected that any defects in the region of interest 46 would be sufficiently small compared to the larger structures such as the stringers 18 so as not to significantly affect the image density mean or other image quality measurement.

Many statistics and image processing methodologies can be applied to the test image and used to determine if the exposure is appropriate, such as the above-noted image density mean; range, standard deviation, image segmentation, or histogram.

The above-described method is highly useful for evaluating objects without a-priori information of their structure. However, to the extent such information is available, it may be used in combination with the method described herein to improve inspection efficiency. In a particular model of airframe or other object with a known interior construction, the initial imaging parameters can be adjusted to accommodate those structures. For example, if the location of stringers, ribs, or other thick structural elements is known, a higher initial flux level may be used when the region of interest 46 is aligned with those elements. This would reduce the number of iterations needed to arrive at a final set of imaging parameters.

Furthermore, the method described herein may be used to build a database of information about a particular structure to enhance subsequent operations. As each region of interest 46 is evaluated using the iterative process described, the final imaging parameters may be stored and then used for later reference as initial or baseline parameters.

While specific embodiments of the present invention have been described, it will be apparent to those skilled in the art that various modifications thereto can be made without departing from the spirit and scope of the invention. Accordingly, the foregoing description of the preferred embodiment of the invention and the preferred mode for practicing the invention are provided for the purpose of illustration only and not for the purpose of limitation, the invention being defined by the claims.

## Claims

1. A method of radiographic inspection (10) of an object, comprising:
(a) providing a radiation source (22) and a radiation detector (24) located on opposite sides of the object;
(b) positioning the radiation detector (24) to receive radiation transmitted through the object from the radiation source (22);
(c) radiographically imaging a region of interest (46) of the object with the radiation source (22) and the radiation detector (24), using a set of initial imaging parameters to produce a test image;
(d) obtaining at least one quality measurement of the test image;
(e) comparing the quality measurement to predetermined image quality limits; and
(f) in response to the quality measurement exceeding the predetermined image quality limits, changing at least one of the initial imaging parameters to generate a new set of image parameters.

2. The method of claim 1 further comprising
(a) imaging the region of interest (46) with the radiation source (22) and the radiation detector (24), using the new set of imaging parameters, to produce a new test image;
(b) obtaining at least one quality measurement of the test image;
(c) comparing the quality measurement to predetermined image quality limits; and
(d) repeating steps (a) through (c) until the quality measurement falls within the predetermined image quality limits.

3. The method of claim 1 or claim 2 further comprising the step of, when the quality measurement falls within the predetermined image quality limits, imaging the region of interest (46) to generate a final image for evaluation.

4. The method of any preceding claim wherein the quality measurement is a statistical measurement.

5. The method of any preceding claim further including:
(a) providing at least one element of information regarding a structure of the object; and
(b) determining the initial imaging parameters with reference to the element of information.

6. A system for radiographic inspection (10) of an object, comprising:
(a) a radiation source (22) carried by a first manipulator (26) operable to position the radiation source (22) on one side of a region of interest (46) of the object;
(b) a radiation detector (24) carried by a second manipulator (28) operable to position the radiation detector (24) on another side of the region of interest (46) of the object such that the radiation detector (24) can receive radiation transmitted through the region of interest (46) from the radiation source (22) to produce a test image using a set of initial imaging parameters;
(c) means for obtaining at least one quality measurement of the test image and comparing the quality measurement to predetermined image quality limits; and
(d) means for changing at least one of the initial imaging parameters to generate a new set of image parameters in response to the quality measurement exceeding the predetermined image quality limits.

7. The system of claim 6 further comprising:
(a) means for imaging the region of interest (46) with the radiation source (22) and the radiation detector (24), using the new set of imaging parameters, to produce a new test image;
(b) means for obtaining at least one quality measurement of the test image and comparing the quality measurement to predetermined image quality limits; and
(c) means for iteratively changing the imaging parameters and re-imaging the region of interest (46) until the quality measurement falls within the predetermined image quality limits.

8. The system of claim 6 or claim 7 further comprising means for imaging the region of interest (46) to generate a final image for evaluation, in response to the quality measurement falling within the predetermined image quality limits.

9. The system of any of claims 6 to 8 further comprising a data storage device for storing a final set of imaging parameters which results in the quality measurement falling within the predetermined image quality limits.

10. The system of any of claims 6 to 9 further comprising a controller (42) operably connected to the radiation source (22) and the radiation detector (24), the controller (42) operable to obtain at the least one quality measurement of the test image and to compare the quality measurement to predetermined image quality limits.
